# EUROPÄISCHE PATENTSCHRIFT

(11) **EP 0 659 302 B1**
(45) Veröffentlichungstag und Bekanntmachung des Hinweises auf die Patenterteilung: **13.11.1996**
(21) Anmeldenummer: 94922261.6
(22) Anmeldetag: 05.07.1994
(51) Int. Cl.: H01S 3/041, H01S 3/134

(54) **VORRICHTUNG ZUR STRAHLRICHTUNGSSTABILEN HALTERUNG EINES ZYLINDRISCHEN LASERROHRES**
DEVICE FOR HOLDING A CYLINDRICAL LASER TUBE IN A STABLE RADIATION DIRECTION
DISPOSITIF DE MAINTIEN D'UN TUBE LASER CYLINDRIQUE DANS UNE DIRECTION STABLE DE RAYONNEMENT

(30) Priorität: 08.07.1993 DE 4322723
(43) Veröffentlichungstag der Anmeldung: 28.06.1995
(73) Patentinhaber: Leica AG, CH-9435 Heerbrugg (CH)
(72) Erfinder: MEIER, Dietrich, CH-5015 Niedererlinsbach (CH)
(74) Vertreter: Stamer, Harald, Dipl.-Phys.
(86) Internationale Anmeldenummer: EP9402203
(87) Internationale Veröffentlichungsnummer: WO9502265

(56) Entgegenhaltungen:
- EP-A- 0 316 664
- DE-A- 4 119 027
- GB-A- 2 001 798
- JAPANESE JOURNAL OF APPLIED PHYSICS, Bd.22, Nr.10, Oktober 1983, TOKYO JP Seiten 1538 - 1542 A.SASAKI 'A SIMPLE METHOD FOR SINGLE-FREQUENCY OPERATION AND AMPLITUDE AND FREQUENCY-STABILIZATION OF AN INTERNAL-MIRROR He-Ne LASER'
- JAPANESE JOURNAL OF APPLIED PHYSICS, Bd.22, Nr.10, Oktober 1983, TOKYO JP
- Seiten 1538 - 1542 A.SASAKI 'A SIMPLE METHOD FOR SINGLE-FREQUENCY OPERATION AND AMPLITUDE AND FREQUENCY-STABILIZATION OF AN INTERNAL-MIRROR He-Ne LASER'

## Beschreibung

Die Erfindung betrifft eine Vorrichtung zur strahlrichtungsstabilen Halterung eines zylindrischen Laserrohres im Innenraum eines metallischen Gehäuses, wobei der Innenraum einen größeren Durchmesser hat als das Laserrohr und in den Endbereichen des Innenraumes O-Ringe zur Lagerung des Laserrohres eingepaßt sind und das metallische Gehäuse auf einer Grundplatte gelagert ist.

Zylindrische Laserrohre, insbesondere für HeNe-Gasentladungslaser, sind heute als betriebsfertige, abgeschlossene Einheiten mit angeschmolzenen Resonator-Spiegeln erhältlich. Die aktuell emittierte Wellenlänge des Lasers hängt auch vom Abstand und der Neigung der Spiegel zueinander ab. Der Abstand der Spiegel kann durch Wärmeausdehnung des Laserrohres gesteuert werden. Das metallische Gehäuse dient als Ofen zur Einstellung der Temperatur des Laserrohres. Die Erwärmung soll zu keiner Verspannung des Laserrohres führen, um die Neigung der Spiegel zueinander nicht zu verändern.

Die Richtung des Laserstrahles hängt von der Lagerung des Laserrohres in dem Gehäuse ab. Für eine spannungsarme Lagerung des Laserrohres werden Federn oder elastische O-Ringe vorgesehen (DE 28 32 117 C2, SIEMENS-Druckschrift B6-P 8808 "Für die HeNe-Lasertechnik: Röhre, Module, Stromversorgungen, Ausgabe 2, Seite 10"). Wärmegradienten im metallischen Gehäuse können jedoch zu Verspannungen führen, die von den O-Ringen nicht aufgefangen werden können. Zusätzlich können durch äußere Wärmeabstrahlung des Gehäuses oder kühlende Luftströme Wärmegradienten in der Grundplatte entstehen, die ebenfalls die Längsrichtungsstabilität des Gehäuses und damit der Laserstrahlachse beeinflussen. Auch Erschütterungen des Systems können zu Querverlagerungen des Laserrohres in den elastischen O-Ringen führen.

Laser der vorgenannten Art werden z.B. in der Koordinatenmeßtechnik eingesetzt. Für präzise Längenmessungen, insbesondere mit interferometrischen Methoden und Genauigkeiten, ist eine Stabilisierung der Laserwellenlänge eine Grundvoraussetzung. Für Winkelmessungen, insbesondere Polarwinkel-Messungen, ist die Strahlrichtungsstabilität von größter Wichtigkeit.

Der Erfindung lag daher die Aufgabe zugrunde, die bekannte Halterung mit verbesserter Temperaturregelung, geringen Temperaturgradienten und stabilerer Längsrichtungslagerung des Laserrohres auszustatten.

Diese Aufgabe wird bei einer Vorrichtung der eingangs genannten Art erfindungsgemäß durch die kennzeichnenden Merkmale des Anspruchs 1 gelöst. Vorteilhafte Ausgestaltungen ergeben sich aus den Merkmalen der Unteransprüche 2 bis 8.

Durch das Einfüllen einer weichen, wärmeleitenden Masse in den Zwischenraum zwischen der inneren Gehäusewandung und dem Laserrohr wird eine gute Temperaturverteilung durch Wärmeleitung erreicht. Die O-Ringe dienen gleichzeitig als Halter für das Laserrohr und als Abdichtung für die Wärmeleitmasse. Die eingefüllte Masse stabilisiert zusätzlich das Laserrohr gegen Querverlagerungen und gleicht Temperaturgradienten aus. Die Temperatursteuerung durch Wärmeleitung ermöglicht auch den Entzug von Wärme aus dem System durch an der Außenwandung des Gehäuses angebrachte Kühlelemente. Durch die Kühlmöglichkeit steht auch ein Temperaturregelbereich zur Verfügung, der unterhalb der Umgebungstemperatur liegt, so daß die Arbeitstemperatur des als Ofen dienenden Gehäuse auf die Umgebungstemperatur gelegt werden kann. Die nur einseitig ortsfeste Verbindung des Gehäuses mit der Grundplatte erlaubt unterschiedliche Wärmeausdehnungen zwischen den beiden Bauelementen, ohne daß diese zu einer Verspannung der Längsachse des Gehäuses führen.

Der Einsatz von Peltier-Elementen, die heizen und kühlen können, ist besonders vorteilhaft. Bei symmetrischer Anordnung mehrerer Peltier-Elemente an der Außenwandung des Gehäuses kann die Größe der einzelnen Elemente relativ klein gehalten werden. Bei vorgegebener Gehäuselänge können den einzelnen Elementen dann noch relativ große Kühlkörper mit nach außen weisenden Kühlrippen zur Wärmeableitung zugeordnet werden.

Durch die Lagerung des Gehäuses auf thermisch isolierenden Füßen wird eine Wärmeüberleitung auf die Grundplatte weitgehend vermieden. Zusätzliche wärmeisolierende Beschichtungen auf dem Gehäuse und der Grundplatte verhindern auch eine Wärmeübertragung durch Wärmestrahlung.

In der Zeichnung ist ein Ausführungsbeispiel der erfindungsgemäßen Vorrichtung schematisch dargestellt und wird anhand der Figuren näher beschrieben. Im einzelnen zeigen:
- Fig. 1: einen Querschnitt durch die Vorrichtung,
- Fig. 2: eine Aufsicht und
- Fig. 3: ein Funktionsbild der Wellenlängenstabilisierung.

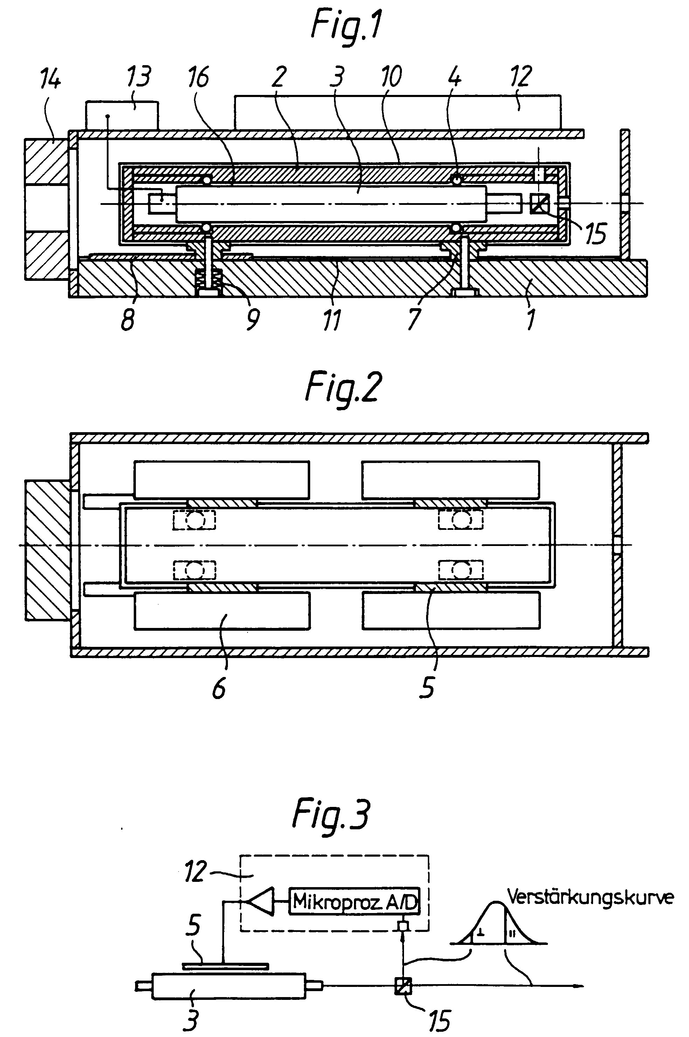

Fig. 1 zeigt die Grundplatte 1, das Gehäuse 2 und das Laserrohr 3. Das Gehäuse besteht z.B. aus Aluminium und das Laserrohr aus Glas. In den Endbereichen des Gehäuses 2 sind O-Ringe 4 eingepaßt, die das Laserrohr 3 halten. Das Gehäuse ist auch an den Enden verschlossen und weist nur an der rechten Seite eine Lichtaustrittsöffnung auf. Der von den O-Ringen 4 eingeschlossene Zwischenraum zwischen dem Gehäuse 2 und dem Laserrohr 3 ist mit einer wärmeleitenden Paste 16 aufgefüllt.

Das Gehäuse 2 hat einen quadratischen Querschnitt, so daß die Peltier-Elemente 5 auf ebenen Flächen anliegen, wie aus Fig. 2 ersichtlich ist. Den Peltier-Elementen sind großflächige Kühlkörper 6 zugeordnet.

Das Gehäuse 2 ist über einen Fuß 7 aus wenig wärmeleitendem Stahl auf der Lichtaustrittsseite fest mit der Grundplatte 1 verbunden. Eine mit Federn 9 unterlegte Schraube hält den Fuß auf der anderen Seite. Dieser Fuß ist daher in einer Längsführung 8 gleitend und kann gegenseitige Wärmeausdehnungen zwischen Grundplatte 1 und Gehäuse 2 ausgleichen. Zur Abschirmung der Wärmestrahlung ist das Gehäuse 2 mit einer wärmeisolierenden Beschichtung 10 und die Grundplatte 1 mit einer Isolation 11 versehen.

Der gesamte Aufbau ist mit einem Mantel umgeben in dem von einer Seite über einen Ventilator 14 Kühlluft geblasen wird, die die Kühlkörper 6 auf Umgebungstemperatur halten. Die Steuerungselektronik 12 für die Laser-Moden-Regelung und die Energieversorgung 13 für den Betrieb des Lasers sind auf der Außenseite dieses Mantels angeordnet.

In Fig. 3 ist das prinzipielle Funktionsbild der Wellenlängenstabilisierung dargestellt, und zwar am Beispiel eines relativ kurzen Laserrohres 3, bei dem nur zwei senkrecht zueinander schwingende linear polarisierte Moden unter der Verstärkungskurve des Lasers auftreten. Beide Longitudinal-Moden haben eine geringfügig unterschiedliche Wellenlänge, von der nur eine für interferometrische Messungen verwendet werden kann. Mit einem polarisierenden Strahlteiler 15 am Ausgang und außerhalb des Laserrohres 3 wird das Licht der beiden Moden getrennt. Die Intensität des um 90 Grad abgelenkten Strahlanteiles wird gemessen, A/D-gewandelt und über einen Mikroprozessor zur Steuerung des Regelstromes der Peltier-Elemente 5 verwendet. Die Mikroprozessorsteuerung ist so ausgelegt, daß die ausgekoppelte Lichtintensität konstant gehalten wird. Dabei werden vorteilhafterweise über die Betriebstemperatur des Gehäuses 2 die Moden unterhalb der Verstärkungskurve des Lasers so verschoben, daß die Intensität des ausgekoppelten Lichtanteils wesentlich geringer als die des Nutzlichtanteils ist.

## Patentansprüche

1. Vorrichtung zur strahlrichtungsstabilen Halterung eines zylindrischen Laserrohres (3) im zylindrischen Innenraum eines metallischen Gehäuses (2), wobei der Innenraum einen größeren Durchmesser hat als das Laserrohr (3) und in den Endbereichen des Innenraumes O-Ringe (4) zur Lagerung des Laserrohres (3) eingepaßt sind und das metallische Gehäuse (2) auf einer Grundplatte (1) gelagert ist, **dadurch gekennzeichnet,** daß der von den O-Ringen eingeschlossene Zwischenraum zum Laserrohr (3) innerhalb des metallischen Gehäuses (2) mit einer wärmeleitenden Paste (16) aufgefüllt ist, im Kontakt mit der Außenwandung des Gehäuses (2) steuerbare Heiz- und Kühlelemente angebracht sind und das Gehäuse (2) nur einseitig ortsfest auf der Grundplatte (1) gelagert ist.

2. Vorrichtung nach Anspruch 1, **dadurch gekennzeichnet**, daß als Heiz- und Kühlelement mindestens ein Peltierelement (5) vorgesehen ist.

3. Vorrichtung nach Anspruch 2, **dadurch gekennzeichnet,** daß mehrere Peltierelemente (5) in symmetrischer Anordnung vorgesehen sind.

4. Vorrichtung nach Anspruch 2 oder 3, **dadurch gekennzeichnet,** daß den Peltierelementen (5) je ein Kühlkörper (6) mit nach außen weisenden Kühlrippen zugeordnet ist.

5. Vorrichtung nach Anspruch 1, **dadurch gekennzeichnet,** daß das Gehäuse (2) über thermisch isolierende Füße (7) auf der Grundplatte (6) ruht.

6. Vorrichtung nach Anspruch 1, **dadurch gekennzeichnet,** daß die Außenwandung des Gehäuses (2) mit Ausnahme der Kontaktflächen für die Heiz- und Kühlelemente mit einer wäremeisolierenden Beschichtung (10) versehen ist.

7. Vorrichtung nach Anspruch 1, **dadurch gekennzeichnet,** daß die Grundplatte (1) mit Ausnahme der Lagerstellen für das Gehäuse (2) mit einer wärmeisolierenden Beschichtung (11) versehen ist.

8. Vorrichtung nach Anspruch 1, **dadurch gekennzeichnet,** daß das Gehäuse (2) einen nahezu quadratischen Querschnitt aufweist.

## Claims

1. Device for the retention of a cylindrical laser tube (3), stably in direction of the beam, in the cylindrical interior space of a metallic housing (2), wherein the interior space has a greater diameter than the laser tube (3) and O-rings (4) for the bearing of the laser tube (3) are fitted into the end regions of the interior space and the metallic housing (2) is borne on a base plate (1), characterised thereby, that the intermediate space, which is enclosed by the 0-rings, to the laser tube (3) within the metallic housing (2) is filled out by a thermally conductive paste (16), controllable heating and cooling elements are mounted in contact with the outward wall surface of the housing (2) and the housing (2) is borne at only one side in fixed location on the base plate (1).

2. Device according to claim 1, characterised thereby, that at least one Peltier element (5) is provided as heating and cooling element.

3. Device according to claim 2, characterised thereby, that several Peltier elements (5) are provided in a symmetrical arrangement.

4. Device according to claim 2 or 3, characterised thereby, that a respective cooling body (6) with outwardly facing cooling ribs is associated with each of the Peltier elements (5).

5. Device according to claim 1, characterised thereby, that the housing (2) rests by way of thermally insulating feet (7) on the base plate (1).

6. Device according to claim 1, characterised thereby, that the outward wall surface of the housing (2) with the exception of the contact surfaces for the heating and cooling elements is provided with a thermally insulating coat (10).

7. Device according to claim 1, characterised thereby, that the base plate (1) with the exception of the bearing places for the housing (2) is provided with a thermally insulating coat (11).

8. Device according to claim 1, characterised thereby, that the housing (2) displays a nearly square cross-section.

## Revendications

1. Dispositif de maintien d'un tube laser cylindrique (3) dans une direction stable de rayonnement dans l'espace interne d'un boîtier métallique (2), où l'espace interne a un plus grand diamètre que le tube laser (3) et dans les parties extrêmes de l'espace interne, sont adaptés des joints toriques (4) pour la mise en place du tube laser (3), et le boîtier métallique (2) est reçu sur une plaque de base (1), caractérisé en ce que l'espace intermédiaire, enclos par les joints toriques pour le tube laser (3) à l'intérieur du boîtier métallique (2), est rempli d'une pâte conductrice de la chaleur (16), en contact avec la paroi externe du boîtier (2), sont disposés des éléments chauds et froids réglables et le boîtier (2) n'est solidaire de la plaque de base (1) que d'un côté.

2. Dispositif selon la revendication 1, caractérisé en ce qu'on prévoit, en tant qu'élément chaud et froid,au moins un élément de Peltier (5).

3. Dispositif selon la revendication 2, caractérisé en ce plusieurs éléments de Peltier (5) sont prévus en agencement symétrique.

4. Dispositif selon la revendication 2 ou 3, caractérisé en ce qu'à chaque élément de Peltier (5) est affecté un corps froid (6) avec des nervures de refroidissement tournées vers l'extérieur.

5. Dispositif selon la revendication 1, caractérisé en ce que le boîtier (2) repose sur la plaque de base (6) au moyen de pieds thermiquement isolants (7).

6. Dispositif selon la revendication 1, caractérisé en ce que la paroi externe du boîtier (2), à l'exception des surfaces de contact pour les éléments chauds et froids, est pourvue d'un revêtement thermo-isolant (10).

7. Dispositif selon la revendication 1, caractérisé en ce que la plaque de base (1), à l'exception des points d'appui pour le boîtier (2), est pourvue d'un revêtement thermo-isolant (11).

8. Dispositif selon la revendication 1, caractérisé en ce que le boîtier (2) présente une section transversale presque carrée.
